(19) Europäisches Patentamt
European Patent Office
Office européen des brevets

(11) **EP 3 435 618 B1**

(12) **EUROPEAN PATENT SPECIFICATION**

(45) Date of publication and mention
of the grant of the patent:
**17.02.2021 Bulletin 2021/07**

(51) Int Cl.:
***H04L 29/06*** *(2006.01)*   ***H04L 12/26*** *(2006.01)*

(21) Application number: **17182854.4**

(22) Date of filing: **24.07.2017**

(54) **A METHOD OF OBSERVING PACKETS IN A NETWORK AND A NETWORK NODE**

VERFAHREN ZUR BEOBACHTUNG VON PAKETEN IN EINEM NETZWERK UND EINEM NETZWERKKNOTEN

UN PROCÉDÉ D'OBSERVATION DE PAQUETS DANS UN RÉSEAU ET UN NOEUD DE RÉSEAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.01.2019 Bulletin 2019/05**

(73) Proprietor: **Nokia Technologies Oy**
**02610 Espoo (FI)**

(72) Inventors:
• **WAISBARD, Erez**
**Kfar Sava (IL)**
• **EINZIGER, Gil**
**44643 Kfar Saba (IL)**

(74) Representative: **Louis Pöhlau Lohrentz**
**Patentanwälte**
**Postfach 30 55**
**90014 Nürnberg (DE)**

(56) References cited:
**US-B1- 7 424 489**

• **RAN BEN BASAT ET AL: "Constant Time Updates in Hierarchical Heavy Hitters", ARXIV.ORG, CORNELL UNIVERSITY LIBRARY, 201 OLIN LIBRARY CORNELL UNIVERSITY ITHACA, NY 14853, 21 July 2017 (2017-07-21), XP080778457, DOI: 10.1145/3098822.3098832**
• **GRAHAM CORMODE ET AL: "Finding hierarchical heavy hitters in streaming data", ACM TRANSACTIONS ON KNOWLEDGE DISCOVERY FROM DATA (TKDD), ASSOCIATION FOR COMPUTING MACHINERY, INC, US, vol. 1, no. 4, 2 February 2008 (2008-02-02), pages 1-48, XP058336864, ISSN: 1556-4681, DOI: 10.1145/1324172.1324174**

**Description**

Field of the invention

The invention relates to communication technology, in particular to a method of observing packets in a network.

Background

Network measurements are essential for a variety of network functionalities such as traffic engineering, load balancing, quality of service, caching, anomaly and intrusion detection [1]-[8]. A major challenge in performing and maintaining network measurements comes from rapid line rates and the large number of active flows.

Previous works suggested identifying Heavy Hitter (HH) flows that account for a large portion of the traffic. Indeed, approximate HH are used in many functionalities and can be captured quickly and efficiently. However, applications such as anomaly detection and Distributed Denial of Service (DDoS) attack detection require more sophisticated measurements [9], [10]. In such attacks, each device generates a small portion of the traffic but their combined volume is overwhelming. HH measurement is therefore insufficient as each individual device is not a heavy hitter.

Hierarchical Heavy Hitters (HHH) account aggregates of flows that share certain Internet protocol (IP) prefixes. The structure of IP addresses implies a prefix based hierarchy as defined more precisely below. In the DDoS example, HHH can identify IP prefixes that are suddenly responsible for a large portion of traffic and such an anomaly may very well be a manifesting attack. Further, HHH can be collected in one dimension, e.g., a single source IP prefix hierarchy, or in multiple dimensions, e.g., a hierarchy based on both source and destination IP prefixes. HHH measurement can be done according to multiple packet header fields. In this patent, term "dimension" of an HHH measurement is the number of header fields that participate in the measurement. Specifically, dimension is used to represent the number of parameters that are considered while analysing aggregation.

The nature of the hierarchy changes from system to system, in devices near edge servers it often make sense to only analyze aggregates based on the source IP field of packets. Alternatively, in backbone links it is useful to perform a two-dimensional source/destination analysis. Such an analysis may indicate a manifesting attack against an edge server. In this patent, term "flavor" of the HHH measurement provides the following details about the measurement: a. which fields participate in the HHH analysis; b. the structure of hierarchy for each field. Specifically, flavor is used to indicate the parameters that are considered while analysing aggregation and the granularity corresponding to the respective parameter. Term "granularity" refers to the structure of the hierarchy in a specific field. Specifically, it indicates the resolution of aggregation.

The main difficulty of performing HHH measurement in network devices is that current HHH algorithms use different data structures for each flavor of the HHH measurement. For example, we require different data structure for one and two dimensional hierarchies. We also require different structures depending if the measurement is done in bit or byte granularity. This dependence between the performed measurement and the used data structures prevents reuse of memory for multiple measurement configurations and requires hardware vendors to hard code a measurement configuration in their devices. Thus, HHH measurements are difficult to perform in current technology Document RAN BEN BASAT ET AL: "Constant Time Updates in Hierarchical Heavy Hitters", ARXIV.ORG, CORNELL UNIVERSITY LIBRARY, 201 OLIN LIBRARY CORNELL UNIVERSITY ITHACA, NY 14853, 21 July 2017 (2017-07-21), XP080778457 relates to hierarchical heavy hitters (HHH) and their updates to prevent DDoS. A randomized constant time algorithm for HHH is provided.

The object of the present invention is to improve the memory efficiency and allow to reuse the same hardware for multiple measurement tasks.

Summary of the Invention

The object of the invention is achieved by the method in the claims.

According to one aspect of the invention, there is provided a method according to claim 1, in a network node, of monitoring packets, the method comprising steps of: a) obtaining a basic key from a packet, the basic key comprising a first number $a$ of parameters charactering the packet, the first number $a$ being a natural number; b) determining a first specification comprising a second number $d$ of entries, each entry indicating a parameter comprised in the basic key, and a granularity corresponding to the parameter, the second number $d$ being a natural number and not bigger than the first number $d \leq a$; c) generating a third number $H$ of extended keys for the packet based on the basic key and the first specification, each extended key comprising the basic key or a modified basic key and an indication of a location of an aggregation, the location of the aggregation indicated in each extended key being different from each other, the third number $H$ indicating a number of all possible locations of the aggregation according to the first specification; d) updating, a first result related to heavy hitter determination for each of the extended keys based on a Heavy Hitter algorithm.

In a preferred embodiment, the method further comprises a step of: e) receiving a query request about a heavy hitter; f) determining, based on a Heavy Hitter algorithm, for each of the extended keys, whether the respective extended key represents a heavy hitter.

In a preferred embodiment, the method further comprises a step of: g) receiving a query request about a hierarchical heavy hitter; h) determining whether there is a hierarchical heavy hitter based on the first results updated in step e).

In a preferred embodiment, the first result being a frequency of the respective extended key, step f) further comprising: f1) determining, for a predetermined time period, for each of the extended keys, whether a frequency of the respective extended key is equal to or above a predetermined threshold $\theta \cdot N,$ wherein, $N$ represents a number of packets monitored during the predetermined time period, and $\theta$ represents a threshold parameter given by an user or an operator; f11) if so, determining the location of the aggregation indicated in the respective extended key as the heavy hitter.

In a preferred embodiment, the parameters comprised in the basic key is selected from the group consisting of source IP, source port, destination IP, destination port, protocol.

In a preferred embodiment, the first specification is indicated by a user or an operator of the network.

According to the invention, in the modified basic key comprised in the extended key, bits from the least significant bit to the location indicated in the extended key are unified.

In a preferred embodiment, in the modified basic key comprised in the extended key, bits from the least significant bit to the location indicated in the extended key are zeroed.

In a preferred embodiment, for $i_{th}$ entry comprised in the first specification, $1 \leq i \leq d,$ the parameter comprising $b_i$ bits, the granularity indicating that the parameter can be modified on a resolution of $a_i$ bits, the third number $H$ is determined as:.

$$H = \left( \left\lceil \frac{b_1}{a_1} + 1 \right\rceil \right) \cdot \left( \left\lceil \frac{b_2}{a_2} + 1 \right\rceil \right) \cdot \ldots \cdot \left( \left\lceil \frac{b_d}{a_d} + 1 \right\rceil \right),$$

where the notation $\lceil x \rceil$ means that x is rounded up to the nearest integer value.

According to another aspect of the present invention, there is provided a network node as claimed in claim 9, configured to: a) obtain a basic key from a packet, the basic key comprising a first number $a$ of parameters charactering the packet, the first number $a$ being a natural number; b) determine a first specification comprising a second number $d$ of entries, each entry indicating a parameter comprised in the basic key, and a granularity corresponding to the parameter, the second number $d$ being a natural number and not bigger than the first number $d \leq a$ ; c) generate a third number $H$ of extended keys for the packet based on the basic key and the first specification, each extended key comprising the basic key or a modified basic key and an indication of a location of an aggregation, the location of the aggregation indicated in each extended key being different from each other, the third number $H$ indicating a number of all possible locations of the aggregation according to the first specification; d) update, a first result related to heavy hitter determination for each of the extended keys based on a Heavy Hitter algorithm.

In a preferred embodiment, the network node is further configured to: e) receive a query request about a heavy hitter; f) determine, based on a Heavy Hitter algorithm, for each of the extended keys, whether the respective extended key represents a heavy hitter.

In a preferred embodiment, the network node is further configured to: g) receive a query request about a hierarchical heavy hitter; h) determine whether there is a hierarchical heavy hitter based on the first results updated in step e).

In a preferred embodiment, the first result is a frequency of the respective extended key, and the network node is further configured to: f1) determine, for a predetermined time period, for each of the extended keys, whether a frequency of the respective extended key is equal to or above a predetermined threshold $\theta \cdot N,$ wherein, $N$ represents a number of packets monitored during the predetermined time period, and $\theta$ represents a threshold parameter given by an user or an operator; f11) if so, the network node being further configured to determine the location of the aggregation indicated in the respective extended key as the heavy hitter.

In a preferred embodiment, the parameters comprised in the basic key is selected from the group consisting of source IP, source port, destination IP, destination port, protocol.

In a preferred embodiment, the first specification is indicated by a user or an operator of the network.

According to the present invention, each HHH update operation is transformed into multiple simpler HH updates. Then, the common HH infrastructure is modified with all the simpler HH updates.

The present invention allows every flavor of hierarchical heavy hitter measurement as well as plain heavy hitters to be performed using the same data structure and thus conserve space and make HHH analysis practical to implement in network devices. It also adds the unique ability to define the measurement flavor at runtime. The same hardware is utilized for any of these measurement tasks. This enables hardware to offer a programmable measurement framework. It improves the flexibility and efficiency of HHH measurement.

Brief description of the figures

The features and advantages of the invention will be more completely understood by appreciating the following detailed description of preferred embodiments with reference to the figures, wherein

Fig. 1 depicts a schematic flow chart of the method according to an embodiment of the present invention;
Fig. 2 depicts an example of locations of aggregation according to an embodiment of the present invention;
Fig. 3 depicts an exemplary Algorithm 1 according to an embodiment of the present invention;
Fig. 4 depicts a schematic block diagram of a network node 400 according to one embodiment of the invention.

Detailed description

Prior to the detailed description of the embodiments of the present invention, some general definitions will be given as below.

IP addresses are considered to form a hierarchical domain with either bit or byte size granularity. Fully specified IP addresses are the lowest level of the hierarchy and can be generalized. We use $u$ to denote the domain of fully specified items. For example, 181.7.20.6 is a fully specified IP address, and 181.7.20.* generalizes it by a single byte. Similarly, 181.7.* generalizes it by two bytes and formally, a fully specified IP address is generalized by any of its prefixes. The parent of an item is the longest prefix that generalizes it.

In two dimensions, we consider a tuple containing source and destination IP addresses. A fully specified item is fully specified in both dimensions. For example, (<181. 7. 20. 6>→<208. 67. 222. 222>) is fully specified. In two dimensional hierarchies, each item has two parents, e.g., (<181. 7. 20.*>→<208. 67. 222. 222>) and (<181. 7. 20. 6>→<208. 67. 222. *>) are both parents to (<181. 7. 20. 6> → <208. 67. 222. 222>).

Definition 1: Generalization.

For two prefixes $p, q,$ we denote

$$p \preceq q$$

if in any dimension it is either a prefix of $q$ or is equal to $q$. We also denote the set of elements that are generalized by $p$ with

$$H_p \triangleq \{e \in \mathcal{U} \mid e \preceq p\},$$

and those generalized by a set of prefixes $P$ by

$$H_P \triangleq \cup_{p \in P} H_p.$$

If

$$p \preceq q$$

and $p \neq q$, we denote $p < q$.

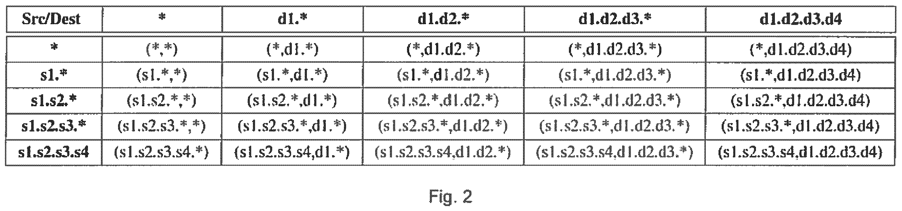

In a single dimension, the generalization relation defines a vector going from fully generalized to fully specified. In two dimensions, the relation defines a lattice where each item has two parents. An example of a two dimensional lattice will be described later with respect to Fig. 2.

Definition 2: Given a prefix $p$ and a set of prefixes $P$, we define $G(p|P)$ as the set of prefixes:

$$\{h : h \in P, h \prec p, \nexists h' \in P \ s.t. \ h \prec h' \prec p\}.$$

Intuitively, $G(p|P)$ are the prefixes in $P$ that are most closely generalized by $p$. E.g., let $p$ = 142.14. * and the set $P$ = {< 142.14.13.* >,< 142.14.13.14 >}, then $G(p|P)$ only contains < 142.14.13.* >

We consider a stream $\mathbb{S}$, where at each step a packet of an item $e$ arrives. Packets belong to a hierarchical domain of size $H$, and can be generalized by multiple prefixes as explained above. Given a fully specified item $e$, $f_e$ is the frequency of e in $\mathbb{S}$. Definition 3 extends this notion to prefixes.

Definition 3: Frequency

Given a prefix $p$ , the frequency of $p$ is:

$$f_p \triangleq \sum_{e \in H_p} f_e.$$

The current number of packets in the stream is denoted N. Our goal is to identify the hierarchical heavy hitter prefixes whose frequency is above the threshold ($\theta \cdot N$).

However, if the frequency of a prefix exceeds the threshold then so is the frequency of all its ancestors. For compactness, we are interested in prefixes whose frequency is above the threshold due to non HHH siblings. This motivates the definition of conditioned frequency $C(p|P)$. Intuitively, $C(p|P)$ measures the additional traffic prefix $p$ adds to a set of previously selected HHHs ($P$), and it is defined as follows.

Definition 4: Conditioned frequency

The conditioned frequency of a prefix $p$ with respect to a prefix set P is:

$$C_{p|P} \triangleq \sum_{e \in H_{(P \cup \{p\})} \setminus H_P} f_e.$$

$Cp|P$ is derived by subtracting the frequency of fully specified items that are already generalized by items in $P$ from $p$'s frequency ($f_p$). In two dimensions, exclusion inclusion principles are used to avoid double counting.

Definition 5: An algorithm solves the $(\varepsilon, \delta)$ - FREQUENCY ESTIMATION problem if for any prefix (x), it provides $\hat{f}_x$ s.t.:

$$\Pr\left[\left|f_x - \hat{f}_x\right| \le \varepsilon N\right] \ge 1 - \delta.$$

Definition 6: Heavy hitter (HH)

Given a threshold ($\theta$) a fully specified item ($e$) is a heavy hitter if its frequency ($f_e$) is above the threshold: $\theta \cdot N$ , i.e., $f_e \ge \theta \cdot N$ .

We now continue and describe how exact hierarchical heavy hitters are found. To that end, partition the hierarchy to levels as explained in Definition 7.

Definition 7: Hierarchy Depth

Define $L$, the depth of a hierarchy, as follows: Given a fully specified element e, we consider a set of prefixes such that: $e \prec p_1 \prec p_2,... \prec p_L$ where $e \neq p_1 \neq p_2 \neq ... \neq p_L$ and $L$ is the maximal size of that set. We also define the function $level(p)$ that given a prefix $p$ returns $p$'s maximal location in the chain, i.e., the maximal chain of generalizations that ends in $p$.

To calculate exact heavy hitters, we go over fully specified items ($level0$) and add their heavy hitters to the set $HHH_0$. Using $HHH_0$, we calculate conditioned frequency for prefixes in level 1 and if $C_{p|HHH_0} \ge \theta \cdot N$ we add $p$ to $HHH_1$. We continue this process until the last level ($L$) and the exact heavy hitters are the set $HHH_L$. Next, we define HHH formally.

Definition 8: Hierarchical HH (HHH)

The set $HHH_0$ contains the fully specified items $e$ s.t. $f_e \geq \theta \cdot N$. Given a prefix $p$ from *level(l)*, $0 \leq l \leq L$, we define:

$$HHH_l = HHH_{l-1} \cup \left\{ p : (p \in leve(l) \wedge C_{p|HHH_{l-1}} \geq \theta \cdot N) \right\}.$$

The set of exact hierarchical heavy hitters HHH is defined as the set $HHH_L$.

Finding exact hierarchical heavy hitters requires plenty of space. Indeed, even finding exact (non hierarchical) heavy hitters requires linear space [20]. Such a memory requirement is prohibitively expensive and motivates finding approximate HHHs.

Definition 9 ($\varepsilon, \delta$) approximate HHH:

An algorithm solves ($\varepsilon, \delta$) - APPROXIMATE HIERARCHICAL HEAVY HITTERS if after processing any stream $\mathbb{S}$ of length N, it returns a set of prefixes ($P$) that satisfies the following conditions:

Accuracy: for every prefix $p \in P$, $|f_p - \hat{f}_p| \leq \varepsilon N$.
Coverage: for every prefix $q \notin P$: $C_{q|P} < \theta N$.

Approximate HHH are a set of prefixes (P) that satisfies accuracy and coverage; there are many possible sets that satisfy both these properties. Unlike exact HHH, we do no require that for $p \in P$, $C_{p|P} \geq \theta N$. Unfortunately, if we add such a requirement then [16] proved a lower bound of $\Omega(\dfrac{1}{\theta^{d+1}})$ space, where $d$ is the number of dimensions. This is considerably more space than is used in the present invention $(\dfrac{H}{\varepsilon})$ that when $\theta \propto \infty$ is also $\dfrac{H}{\theta}$.

The present invention may be implemented as software, firmware or hardware in a network node. In one embodiment, the network node may be a router or part of the data plane of the router. In other embodiments, the present invention may be implemented in other location in the network, for example: an entity that is communicatively connected to a router. In the following, the present invention will be described as software in a router.

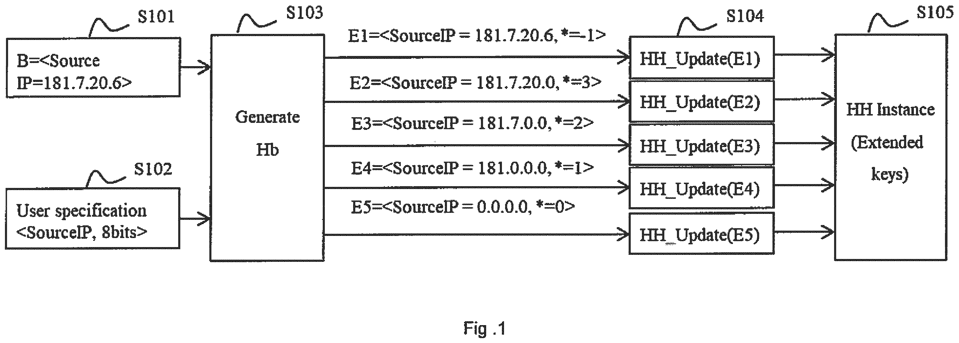

Fig. 1 depicts a schematic flow chart of the method according to an embodiment of the present invention.

In step S101, a basic key B is obtained from a packet. The basic key comprises a first number $a$ of parameters charactering the packet, the first number $a$ being a natural number. In one embodiment, the parameters comprised in the basic key is selected from the group consisting of source IP, source port, destination IP, destination port, protocol.

Normally, parameters charactering the packet are included in the packet's header fields. A router may extract these according to the requirement of a user or an operator. In one embodiment, the first number $a = 5$, and the basic key is expressed using a 5-tuple of the form (srcIP, srcPort, dstIP, dstPort, protocol). In the embodiment shown in Fig. 1, the first number $a = 1$, the basic key comprises only one parameter, i.e., the source IP. In another embodiment, the first number $a = 2$, the basic key comprises the source IP and the destination IP.

In step S102, a first specification is determined. The first specification may be indicated by a user or an operator of the network. The first specification comprises a second number $d$ of entries. Each entry indicates a parameter comprised in the basic key, and a granularity corresponding to the parameter. The second number $d$ reflects the dimension of the measurement and is a natural number and not bigger than the first number $d \leq a$.

In one embodiment, each entry may be expressed as <id, granularity >, with id indicating a parameter comprised in the basic key, and the granularity defines the resolution of aggregation in the parameter indicated by id. In one embodiment, granularities are given as natural numbers that specifies how many bits constitute each hierarchy level. For example, if the field is IP source or destination addresses, the granularity is often 8 bits (one byte) as it is common to parse IP addresses in that manner. However, if the field is source (or destination) port, the granularity is expected to be 32 bits which indicates that the entire header is single domain without hierarchical order (in IPv4, port number is a 32 bit long).

In the embodiment shown in Fig. 1, the first specification comprises only one entry of the form <SourceIP, 8 bits>, $d = 1$. The measurement is carried out based on an analysis of the source IP and the source IP address may be generalized every 8 bits. In another embodiment, the basic key comprises 5 parameters, and is expressed as (srcIP, srcPort, dstIP, dstPort, protocol). The user specification may comprise two entries, <SourceIP, 8 bits> and <DestinationIP, 8 bits>, $d = 2$. In that case, the measurement is carried out based on an analysis of the source IP and the destination IP, while the source IP address and the destination IP address both may be generalized every 8 bits.

In one embodiment, granularity=1 means that a * can be placed in every bit of the field, while granularity = 32, means that it can be placed in 4 byte intervals. In the present invention, placing * into a field means that bit(s) from the least significant bit to the location of * in that field is(are) of arbitrarily value.

In one embodiment, granularity=32 may be used to include ports in the flavor. In that case we either provide a specific port to the measurement, or leave the entire port field as *. A skilled person shall understand, the value of the granularity is not limited to the given example. In another embodiment, granularity= 8 means that a * can be placed in every byte of the field. The number of bits in the granularity is logarithmic in the maximal field size. For example, for IPv4, 5 bits are sufficient and for IPv6, 6 bits are enough.

In step S103, a third number $H$ of extended keys are generated for the packet based on the basic key and the first specification. Each extended key comprises the basic key or a modified basic key and an indication of a location of an aggregation, the location of the aggregation indicated in each extended key being different from each other. The third number $H$ indicates a number of all possible locations of the aggregation according to the first specification.

In one embodiment, for $i_{th}$ entry comprised in the first specification, $1 \leq i \leq d$, the parameter comprising $b_i$ bits, the granularity indicating that the parameter can be generalized on a resolution of $a_i$ bits, the third number $H$ is determined as:.

$$H = \left( \left\lceil \frac{b_1}{a_1} + 1 \right\rceil \right) \cdot \left( \left\lceil \frac{b_2}{a_2} + 1 \right\rceil \right) \cdots \cdots \left( \left\lceil \frac{b_d}{a_d} + 1 \right\rceil \right),$$

where the notation $\lceil x \rceil$ means that x is rounded up to the nearest integer value.

Fig. 2 shows an example of locations of aggregation according to an embodiment of the present invention.

In the embodiment shown in Fig. 2, the basic key comprises two parameters, i.e. the source IP and the destination IP. The user specification comprises two entries <SourceIP, 8 bits> and <DestinationIP, 8 bits>.

The source IP and the destination IP are respectively 32 bits, therefore, there are

$$H = \left( \left\lceil \frac{32}{8} + 1 \right\rceil \right) \cdot \left( \left\lceil \frac{32}{8} + 1 \right\rceil \right) = 25$$

possible locations of aggregation. All of them are shown in Fig. 2.

In Fig.2, each lattice node is generalized by all nodes that are upper or more to the left. The most generalized node (*,*) is called fully general and the most specified node (s1.s2.s3.s4; d1.d2.d3.d4) is called fully specified. The parents of each node are directly above it and directly to the left. The third number $H$ is the hierarchy's size defined as the number of nodes in the lattice.

In another embodiment, in IPv4, byte level one dimensional hierarchies imply $H = 5$ as each IP address is divided into four bytes and querying * is also allowed.

The location of the * in Fig.2 suggests the location of generalization. The location of generalization shall be encoded and incorporated into the extended key. In the following, an exemplary method of encoding the location of generalization is described with respect to Fig.2.

In Fig.2, the two * locations need to be encoded. Since IP addresses are at most 64 bit long, the most general application in the context of the present invention requires additional $\log_2 (64) = 6$ bits per field. Thus, if the basic key is of the form

*< sourceIP, destinationIP >,*

an encoding of the form

*< sourceIP, destinationIP, destOffset, srcOffset >*

is used. The location of the * is given in the additional offset fields. If the field has no star, then an offset of -1 is used.

In a preferred embodiment, bits that are after the star are zeroed to preserve the semantics. For example the prefix (*,*) is encoded as

*< sourceIP, destinationIP,0,0 >.*

If we do not zero out the relevant bits of sourceIP and destinationIP, then different packets will have a different (*,*) encoding. Once they are zeroed, the encoding of all (*,*) prefixes becomes:

< 0.0.0.0,0.0.0.0,0,0 > .

Using this encoding technique a unique key is generated for each of the update operations. The additional memory for key storage grows logarithmic with each of the dimensions.

In another embodiment, bits from the least significant bit to the location indicated in the extended key may be unified in other possible manner, for example, all bits from the least significant bit to the location indicated in the extended key may be replaced with "1".

A skilled person shall understand, the method used to encode the locations of generalization is not limited to the given example, other methods can also be alternatively or additionally used, as long as the locations of generalization can be recovered later from the extended keys.

Generally speaking, given a user specification $S_p$, and a basic key $b$, extended keys may be generated. In one embodiment, the extended keys are of the form

$$(b,<*_1,*_2,\cdots>)$$

Where $*_i$ is the location of the * in field $i$ of the basic key, $1 \le i \le a$. If the user specification places no * in field $i$, we encode $*_i = -1$. We denote by $\mathbb{H}_b$ the generated set that includes all the combinations of extended keys for b with all possible locations of * according to the user specification.

In step S104, a first result related to heavy hitter determination is updated for each of the extended keys based on a Heavy Hitter algorithm. In one embodiment, in step S104, the hierarchical heavy hitter update is broken into $|\mathbb{H}_b|$ plain heavy hitter update that are all performed on the underlying heavy hitters algorithm.

In another embodiment, the first result is an estimated (or accurate) frequency of the respective extended key.

Specifically, in step S104 the HH algorithm receives $\mathbb{H}_b$ and performs an update for every extended key in $\mathbb{H}_b$. Any HH algorithm that satisfies Definition 5 can be used in the present invention.

In one embodiment, Space Saving [19], a popular (non hierarchical) heavy hitters algorithm is used in step S104. The algorithm was realized in Ternary content-addressable memory (TCAM) memories are widely used in packet switching and allow parallel pattern search [21]. TCAM is expensive and therefore limited in switches. The present invention allows reusing the same TCAM for multiple flavors of measurements.

Other algorithms that satisfy the requirement include [22]- [24]. As far as hardware implementations goes, HashPipe [25] implements heavy hitter functionality in P4 [26] (where P4 is an open source language that is used to describe the data flow of network devices). Alternatively or additionally, the work of [27] suggests a method to identify heavy hitters using two simple hash tables. Alternatively, the work of [28] suggests a hardware implementation of k-way set associative memory. Such memory is extensively used to construct hardware caches and hash tables.

In one embodiment, upon receiving a query request about a heavy hitter, it is determined in step S105, based on a Heavy Hitter algorithm, for each of the extended keys, whether the respective extended key represents a heavy hitter.

Specifically, it is determined, for a predetermined time period, for each of the extended keys, whether a frequency of the respective extended key is equal to or above a predetermined threshold $\theta \cdot N$, wherein, $N$ represents a number of packets monitored during the predetermined time period, and $\theta$ represents a threshold parameter given by an user or an operator. If so, the location of the aggregation indicated in the respective extended key may be determined as the heavy hitter.

In another embodiment, upon receiving a query request about a hierarchical heavy hitter, it is determined whether there is a hierarchical heavy hitter based on the first results updated in step S104.

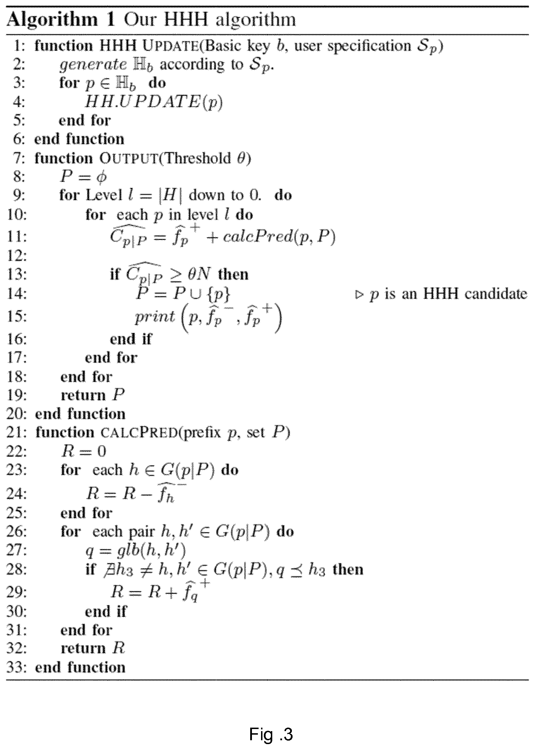

Fig. 3 shows an exemplary Algorithm 1 according to an embodiment of the present invention.

In Fig.3, the HHH query method is exemplified in Algorithm 1 Line 1, method query. In this method, we start with fully specified heavy hitter prefixes and declare them as heavy hitters. Then, we consider prefixes that directly generalize fully specified items and calculate their conditioned frequency with regard to the already selected items. The process is repeated until the hierarchy is exhausted.

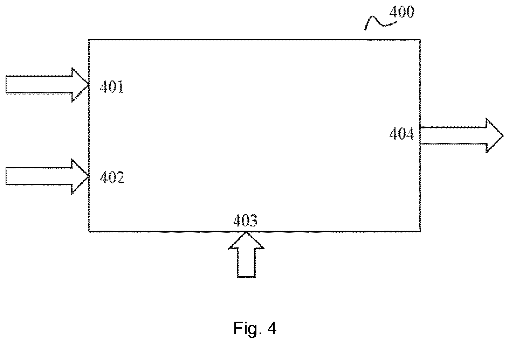

Fig. 4 shows a schematic block diagram of a network node 400 according to one embodiment of the invention.

The network node 400 is configured to obtain a basic key from a packet via a first interface 401. The basic key comprises a first number $a$ of parameters charactering the packet, the first number $a$ being a natural number. In the embodiment shown in Fig.4, the network node 400 is configured to obtain a first specification via a second interface 402. In another embodiment, the first specification may be preconfigured in the network node 400. The first specification comprises a second number $d$ of entries, each entry indicating a parameter comprised in the basic key, and a granularity corresponding to the parameter, the second number $d$ being a natural number and not bigger than the first number $d \le a$.

The network node 400 is configured to generate a third number $H$ of extended keys for the packet based on the basic key and the first specification, each extended key comprising the basic key or a modified basic key and an indication of a location of an aggregation, the location of the aggregation indicated in each extended key being different from each other, the third number $H$ indicating a number of all possible locations of the aggregation according to the first specification.

The network node 400 is further configured to update, a first result related to heavy hitter determination for each of the extended keys based on a Heavy Hitter algorithm.

The network node 400 is further configured to receive a query request via a third interface 403. In one embodiment, the query request is about a heavy hitter. The network node 400 is further configured to determine based on a Heavy Hitter algorithm, for each of the extended keys, whether the respective extended key represents a heavy hitter.

In another embodiment, the query request is about a hierarchical heavy hitter. The network node 400 is further configured determine whether there is a hierarchical heavy hitter based on the first results updated based on the Heavy Hitter algorithm.

The results of the determination are output via the fourth interface 404.

List of symbols

| Symbol | Meaning |
|---|---|
| $a$ | First number |
| $d$ | Second number, dimension of the measurement |
| $H$ | Third number, hierarchy's size |
| $\mathbb{S}$ | Stream |
| $S_p$ | User specification |
| $N$ | Current number of packets (in all flows) |
| $u$ | Domain of fully specified items |
| $\varepsilon$ | Accuracy parameter |
| $\delta$ | Confidence parameter |
| $\theta$ | Threshold parameter |
| $C_{q\|P}$ | Conditioned frequency of q with respect to P |
| $f_q$ | Frequency of prefix q |
| $\widehat{f}_q^{\,+}, \widehat{f}_q^{\,-}$ | Upper, lower bound for $f_q$ |

List of cited references

[1] M. Alizadeh, S. Yang, M. Sharif, S. Katti, N. McKeown, B. Prabhakar, and S. Shenker, "pFabric: Minimal Near-optimal Datacenter Transport," ACM SIGCOMM, pp. 435-446, 2013.

[2] A. R. Curtis, J. C. Mogul, J. Tourrilhes, P. Yalagandula, P. Sharma, and S. Banerjee, "DevoFlow: Scaling Flow Management for Highperformance Networks," in ACM SIGCOMM, 2011, pp. 254-265.

[3] A. Kabbani, M. Alizadeh, M. Yasuda, R. Pan, and B. Prabhakar, "AFQCN: Approximate Fairness with Quantized Congestion Notification for Multi-tenanted Data Centers," in IEEE HOTI, 2010, pp. 58-65.

[4] T. Benson, A. Anand, A. Akella, and M. Zhang, "MicroTE: Fine Grained Traffic Engineering for Data Centers," in ACM CoNEXT, 2011, p. 8.

[5] P. Garcia-Teodoro, J. E. Diaz-Verdejo, G. Macia-Fernandez, and E. Vazquez, "Anomaly-Based Network Intrusion Detection: Techniques, Systems and Challenges," Computers and Security, pp. 18-28, 2009.

[6] L. Ying, R. Srikant, and X. Kang, "The Power of Slightly More than One Sample in Randomized Load Balancing," in IEEE INFOCOM, April 2015, pp. 1131-1139.

[7] M. Alizadeh, T. Edsall, S. Dharmapurikar, R. Vaidyanathan, K. Chu, A. Fingerhut, V. T. Lam, F. Matus, R. Pan, N. Yadav, and G. Varghese, "CONGA: Distributed Congestion-aware Load Balancing for Datacenters," in ACM SIGCOMM, 2014, pp. 503-514.

[8] G. Einziger and R. Friedman, "TinyLFU: A Highly Efficient Cache Admission Policy," in Euromicro PDP, 2014, pp. 146-153.

[9] Y. Zhang, S. Singh, S. Sen, N. Duffield, and C. Lund, "Online Identification of Hierarchical Heavy Hitters: Algorithms, Evaluation, and Applications," in ACM IMC, 2004, pp. 101-114.

[10] V. Sekar, N. Duffield, O. Spatscheck, J. van der Merwe, and H. Zhang, "LADS: Large-scale Automated DDOS Detection System," in USENIX ATEC, 2006, pp. 16-16.

[11] M. Mitzenmacher, T. Steinke, and J. Thaler, "Hierarchical Heavy Hitters with the Space Saving Algorithm," in Proceedings of the Meeting on Algorithm Engineering & Expermiments, ser. ALENEX, 2012, pp. 160-174.

[12] G. Cormode, F. Korn, S. Muthukrishnan, and D. Srivastava, "Finding Hierarchical Heavy Hitters in Streaming Data," ACM Trans. Knowl. Discov. Data, vol. 1, no. 4, pp. 2:1-2:48, Feb. 2008.

[13] ——, "Finding Hierarchical Heavy Hitters in Data Streams," in VLDB, 2003, pp. 464-475.

[14] L. Jose and M. Yu, "Online measurement of large traffic aggregates on commodity switches," in USENIX Hot-ICE, 2011.

[15] G. Cormode, F. Korn, S. Muthukrishnan, and D. Srivastava, "Diamond in the Rough: Finding Hierarchical Heavy Hitters in Multi-dimensional Data," in SIGMOD, 2004, pp. 155-166.

[16] J. Hershberger, N. Shrivastava, S. Suri, and C. D. T'oth, "Space Complexity of Hierarchical Heavy Hitters in Multi-dimensional Data Streams," in ACM PODS, 2005, pp. 338-347.

[17] Y. Lin and H. Liu, "Separator: Sifting Hierarchical Heavy Hitters Accurately from Data Streams," in ADMA, ser. ADMA, 2007, pp. 170- 182.

[18] P. Truong and F. Guillemin, "Identification of heavyweight address prefix pairs in IP traffic," in ITC, Sept 2009, pp. 1-8.

[19] A. Metwally, D. Agrawal, and A. E. Abbadi, "Efficient Computation of Frequent and Top-k Elements in Data Streams," in ICDT, 2005.

[20] S. Muthukrishnan, "Data Streams: Algorithms and Applications," Foundations and Trends in Theoretical Computer Science, vol. 1, no. 2, pp. 117-236, 2005.

[21] N. Bandi, A. Metwally, D. Agrawal, and A. El Abbadi, "Fast data stream algorithms using associative memories," in SIGMOD. ACM, 2007, pp. 247-256.

[22] E. D. Demaine, A. L'opez-Ortiz, and J. I. Munro, "Frequency estimation of internet packet streams with limited space," in EATCS ESA, 2002, pp. 348-360.

[23] R. M. Karp, S. Shenker, and C. H. Papadimitriou, "A simple algorithm for finding frequent elements in streams and bags," ACM Transactions Database Systems, vol. 28, no. 1, Mar. 2003.

[24] G. S. Manku and R. Motwani, "Approximate frequency counts over data streams," in VLDB, 2002.

[25] V. Sivaraman, S. Narayana, O. Rottenstreich, S. Muthukrishnan, and J. Rexford, "Smoking out the heavy-hitter flows with hashpipe," CoRR, vol. abs/1611.04825, 2016. [Online]. Available: http://arxiv.org/abs/1611.04825

[26] P. Bosshart, D. Daly, G. Gibb, M. Izzard, N. McKeown, J. Rexford, C. Schlesinger, D. Talayco, A. Vahdat, G. Varghese, and D. Walker, "P4: Programming protocol-independent packet processors," SIGCOMM Comput. Commun. Rev., vol. 44, no. 3, pp. 87-95, Jul. 2014. [Online]. Available: http://doi.acm.org/10.1145/2656877.2656890

[27] R. Ben-Basat, G. Einziger, R. Friedman, and Y. Kassner, "Optimal elephant flow detection," IEEE INFOCOM, 2017.

[28] ——, "Randomized admission policy for efficient top-k and frequency estimation," IEEE INFOCOM, 2017.

**Claims**

1. A method, in a network node (400), of monitoring packets, the method comprising steps of:

   a) obtaining (S101) a basic key from a packet, the basic key comprising a first number $a$ of parameters charactering the packet, the first number $a$ being a natural number;
   b) determining (S102) a first specification comprising a second number $d$ of entries, each entry indicating a parameter comprised in the basic key, and a granularity corresponding to the parameter, the second number $d$ being a natural number and not bigger than the first number $d \leq a$;
   c) generating (S103) a third number $H$ of extended keys for the packet based on the basic key and the first specification, each of the extended keys comprising a modified basic key and an indication of a location of an aggregation, wherein, in the modified basic key, bits from the least significant bit to the location indicated in the extended key are unified, the location of the aggregation indicated in each of the extended keys being different from each other, the third number $H$ indicating a number of all possible locations of the aggregation according to the first specification;
   d) updating (S104), a first result related to heavy hitter determination for each of the extended keys based on a Heavy Hitter algorithm.

2. A method according to claim 1, further comprising steps of:

   e) receiving a query request about the heavy hitter;
   f) determining (S105), based on the Heavy Hitter algorithm, for each of the extended keys, whether the respective extended key represents the heavy hitter.

3. A method according to claim 1, further comprising steps of:

   g) receiving a query request about a hierarchical heavy hitter;
   h) determining whether there is a hierarchical heavy hitter based on the first results updated in step d).

4. A method according to claim 2, the first result being a frequency of the respective extended key, step f) further comprising:

   f1) determining, for a predetermined time period, for each of the extended keys, whether a frequency of the respective extended key is equal to or above a predetermined threshold $\theta \cdot N$, wherein, $N$ represents a number of packets monitored during the predetermined time period, and $\theta$ represents a threshold parameter given by an user or an operator;
   f11) if so, determining the location of the aggregation indicated in the respective extended key as the heavy hitter.

5. A method according to claim 1, wherein, the parameters comprised in the basic key is selected from the group consisting of source IP, source port, destination IP, destination port, protocol.

6. A method according to claim 1, wherein, the first specification is indicated by a user or an operator of the network.

7. A method according to claim 1, wherein, in the modified basic key comprised in the extended key, bits from the least significant bit to the location indicated in the extended key are zeroed.

8. A method according to claim 1, for $i_{th}$, entry comprised in the first specification, $1 \leq i \leq d,$ the parameter comprising $b_i$ bits, the granularity indicating that the parameter can be modified on a resolution of $a_i$ bits, the third number $H$ is determined as:.

$$H = \left( \left\lceil \frac{b_1}{a_1} + 1 \right\rceil \right) \cdot \left( \left\lceil \frac{b_2}{a_2} + 1 \right\rceil \right) \cdots \left( \left\lceil \frac{b_d}{a_d} + 1 \right\rceil \right),$$

where the notation $\lceil x \rceil$ means that x is rounded up to the nearest integer value.

9. A network node (400), configured to:

a) obtain (S101) a basic key from a packet, the basic key comprising a first number *a* of parameters charactering the packet, the first number *a* being a natural number;

b) determine (S102) a first specification comprising a second number *d* of entries, each entry indicating a parameter comprised in the basic key, and a granularity corresponding to the parameter, the second number *d* being a natural number and not bigger than the first number $d \le a$;

c) generate (S103) a third number *H* of extended keys for the packet based on the basic key and the first specification, each of the extended keys comprising a modified basic key and an indication of a location of an aggregation, wherein, in the modified basic key, bits from the least significant bit to the location indicated in the extended key are unified, the location of the aggregation indicated in each of the extended keys being different from each other, the third number *H* indicating a number of all possible locations of the aggregation according to the first specification;

d) update (S104), a first result related to heavy hitter determination for each of the extended keys based on a Heavy Hitter algorithm.

**10.** A network node (400) according to claim 9, further configured to:

e) receive a query request about the heavy hitter;

f) determine (S105), based on the Heavy Hitter algorithm, for each of the extended keys, whether the respective extended key represents the heavy hitter.

**11.** A network node (400) according to claim 9, further configured to:

g) receive a query request about a hierarchical heavy hitter;

h) determine whether there is a hierarchical heavy hitter based on the first results updated in step d).

**12.** A network node (400) according to claim 9, the first result being a frequency of the respective extended key, the network node (400) being further configured to:

f1) determine, for a predetermined time period, for each of the extended keys, whether a frequency of the respective extended key is equal to or above a predetermined threshold $\theta \cdot N$, wherein, *N* represents a number of packets monitored during the predetermined time period, and $\theta$ represents a threshold parameter given by an user or an operator;

f11) if so, the network node being further configured to determine the location of the aggregation indicated in the respective extended key as the heavy hitter.

**13.** A network node (400) according to claim 9, wherein, the parameters comprised in the basic key is selected from the group consisting of source IP, source port, destination IP, destination port, protocol.

**14.** A network node (400) according to claim 9, wherein, the first specification is indicated by a user or an operator of the network.

**Patentansprüche**

**1.** Verfahren zum Überwachen von Paketen in einem Netzwerkknoten (400), wobei das Verfahren die folgenden Schritte umfasst:

a) Erhalten (S101) eines Basisschlüssels von einem Paket, wobei der Basisschlüssel eine erste Zahl a von Parametern umfasst, die das Paket charakterisieren, wobei die erste Zahl a eine natürliche Zahl ist;

b) Bestimmen (S102) einer ersten Spezifikation, die eine zweite Zahl *d* von Einträgen, wobei jeder Eintrag einen Parameter angibt, der im Basisschlüssel umfasst ist, und eine Granularität, die dem Parameter entspricht, umfasst, wobei die zweite Zahl *d* eine natürliche Zahl und nicht größer als die erste Zahl ist $d \le a$;

c) Erzeugen (S103) einer dritten Zahl H von erweiterten Schlüsseln für das Paket auf Basis des Basisschlüssels und der ersten Spezifikation, wobei jeder der erweiterten Schlüssel einen modifizierten Basisschlüssel und eine Angabe einer Stelle einer Aggregation umfasst, wobei Bits vom niedrigstwertigen Bit bis zu der Stelle, die im erweiterten Schlüssel angegeben ist, im modifizierten Basisschlüssel vereinheitlicht sind, wobei sich die Stellen der Aggregation, die in jedem der erweiterten Schlüssel angegeben sind, voneinander unterscheiden, wobei die dritte Zahl H eine Zahl von allen möglichen Stellen der Aggregation gemäß der ersten Spezifikation angibt;

d) Aktualisieren (S104) eines ersten Ergebnisses, das eine Heavy-Hitter-Bestimmung für jeden der erweiterten Schlüssel auf Basis eines Heavy-Hitter-Algorithmus betrifft.

2. Verfahren nach Anspruch 1, das ferner die folgenden Schritte umfasst:

   e) Empfangen einer Abfrageanforderung zum Heavy Hitter;
   f) Bestimmen (S105) für jeden der erweiterten Schlüssel auf Basis des Heavy-Hitter-Algorithmus, ob der jeweilige erweiterte Schlüssel den Heavy Hitter repräsentiert.

3. Verfahren nach Anspruch 1, das ferner die folgenden Schritte umfasst:

   g) Empfangen einer Abfrageanforderung zu einem hierarchischen Heavy Hitter;
   h) Bestimmen auf Basis der ersten Ergebnisse, die in Schritt d) aktualisiert wurden, ob es einen hierarchischen Heavy Hitter gibt.

4. Verfahren nach Anspruch 2, wobei das erste Ergebnis eine Häufigkeit des jeweiligen erweiterten Schlüssels ist, wobei Schritt f) ferner Folgendes umfasst:

   f1) Bestimmen für eine vorbestimmte Zeitperiode für jeden der erweiterten Schlüssel, ob eine Häufigkeit des jeweiligen erweiterten Schlüssels gleich oder größer als ein vorbestimmter Schwellwert $\theta \cdot N$, ist, wobei $N$ eine Zahl von Paketen repräsentiert, die während der vorbestimmten Zeitperiode überwacht werden, und $\theta$ einen Schwellwertparameter repräsentiert, der von einem Benutzer oder einem Betreiber festgelegt wird;
   f11) wenn ja, Bestimmen der Stelle der Aggregation, die im jeweiligen erweiterten Schlüssel angegeben ist, als den Heavy Hitter.

5. Verfahren nach Anspruch 1, wobei die Parameter, die im Basisschlüssel umfasst sind, aus der Gruppe, die aus Quell-IP, Quellanschluss, Ziel-IP, Zielanschluss, Protokoll besteht, ausgewählt werden.

6. Verfahren nach Anspruch 1, wobei die erste Spezifikation von einem Benutzer oder einem Betreiber des Netzwerks angegeben wird.

7. Verfahren nach Anspruch 1, wobei im modifizierten Basisschlüssel, der im erweiterten Schlüssel umfasst ist, Bits vom niedrigstwertigen Bit zu der Stelle, die im erweiterten Schlüssel angegeben ist, auf null gesetzt sind.

8. Verfahren nach Anspruch 1, wobei für den i-ten Eintrag, der in der ersten Spezifikation umfasst ist, $1 \leq i \leq d$, wobei der Parameter $b_1$ Bits umfasst, wobei die Granularität angibt, dass der Parameter auf eine Auflösung von $a_1$ Bits modifiziert werden kann, die dritte Zahl $H$ als Folgendes bestimmt wird:

$$H = \left( \left\lceil \frac{b_1}{a_1} + 1 \right\rceil \right) \cdot \left( \left\lceil \frac{b_2}{a_2} + 1 \right\rceil \right) \cdot \ldots \cdot \left( \left\lceil \frac{b_d}{a_d} + 1 \right\rceil \right),$$

wobei die Schreibweise $\lceil x \rceil$ bedeutet, dass x auf den nächsten ganzzahligen Wert aufgerundet ist.

9. Netzwerkknoten (400), der zu Folgendem ausgelegt ist:

   a) Erhalten (S101) eines Basisschlüssels von einem Paket, wobei der Basisschlüssel eine erste Zahl a von Parametern umfasst, die das Paket charakterisieren, wobei die erste Zahl a eine natürliche Zahl ist;
   b) Bestimmen (S102) einer ersten Spezifikation, die eine zweite Zahl $d$ von Einträgen, wobei jeder Eintrag einen Parameter angibt, der im Basisschlüssel umfasst ist, und eine Granularität, die dem Parameter entspricht, umfasst, wobei die zweite Zahl $d$ eine natürliche Zahl und nicht größer als die erste Zahl ist $d \leq a$;
   c) Erzeugen (S103) einer dritten Zahl $H$ von erweiterten Schlüsseln für das Paket auf Basis des Basisschlüssels und der ersten Spezifikation, wobei jeder der erweiterten Schlüssel einen modifizierten Basisschlüssel und eine Angabe einer Stelle einer Aggregation umfasst, wobei Bits vom niedrigstwertigen Bit bis zu der Stelle, die im erweiterten Schlüssel angegeben ist, im modifizierten Basisschlüssel vereinheitlicht sind, wobei sich die Stellen der Aggregation, die in jedem der erweiterten Schlüssel angegeben sind, voneinander unterscheiden, wobei die dritte Zahl $H$ eine Zahl von allen möglichen Stellen der Aggregation gemäß der ersten Spezifikation angibt;
   d) Aktualisieren (S104) eines ersten Ergebnisses, das eine Heavy-Hitter-Bestimmung für jeden der erweiterten Schlüssel auf Basis eines Heavy-Hitter-Algorithmus betrifft.

**10.** Netzwerkknoten (400) nach Anspruch 9, der ferner zu Folgendem ausgelegt ist:

e) Empfangen einer Abfrageanforderung zum Heavy Hitter;
f) Bestimmen (S105) für jeden der erweiterten Schlüssel auf Basis des Heavy-Hitter-Algorithmus, ob der jeweilige erweiterte Schlüssel den Heavy Hitter repräsentiert.

**11.** Netzwerkknoten (400) nach Anspruch 9, der ferner zu Folgendem ausgelegt ist:

g) Empfangen einer Abfrageanforderung zu einem hierarchischen Heavy Hitter;
h) Bestimmen auf Basis der ersten Ergebnisse, die in Schritt d) aktualisiert wurden, ob es einen hierarchischen Heavy Hitter gibt.

**12.** Netzwerkknoten (400) nach Anspruch 9, wobei das erste Ergebnis eine Häufigkeit des jeweiligen erweiterten Schlüssels ist,
wobei der Netzwerkknoten (400) ferner zu Folgendem ausgelegt ist:

f1) Bestimmen für eine vorbestimmte Zeitperiode für jeden der erweiterten Schlüssel, ob eine Häufigkeit des jeweiligen erweiterten Schlüssels gleich oder größer als ein vorbestimmter Schwellwert $\theta \cdot N$, ist, wobei $N$ eine Zahl von Paketen repräsentiert, die während der vorbestimmten Zeitperiode überwacht werden, und $\theta$ einen Schwellwertparameter repräsentiert, der von einem Benutzer oder einem Betreiber festgelegt wird;
f11) wobei, wenn ja, der Netzwerkknoten ferner dazu ausgelegt ist, die Stelle der Aggregation, die im jeweiligen erweiterten Schlüssel angegeben ist, als den Heavy Hitter zu bestimmen.

**13.** Netzwerkknoten (400) nach Anspruch 9, wobei die Parameter, die im Basisschlüssel umfasst sind, aus der Gruppe, die aus Quell-IP, Quellanschluss, Ziel-IP, Zielanschluss, Protokoll besteht, ausgewählt wird.

**14.** Netzwerkknoten (400) nach Anspruch 9, wobei die erste Spezifikation von einem Benutzer oder einem Betreiber des Netzwerks angegeben wird.


**Revendications**

**1.** Procédé, dans un nœud de réseau (400), de surveillance de paquets, le procédé comprenant des étapes consistant à :

a) obtenir (S101) une clé de base à partir d'un paquet, la clé de base comprenant un premier nombre a de paramètres caractérisant le paquet, le premier nombre a étant un nombre naturel ;
b) déterminer (S102) une première spécification comprenant un deuxième nombre $d$ d'entrées, chaque entrée indiquant un paramètre compris dans la clé de base, et une granularité correspondant au paramètre, le deuxième nombre d étant un nombre naturel et pas plus grand que le premier nombre $d \leq a$ ;
c) générer (S103) un troisième nombre $H$ de clés étendues pour le paquet sur la base de la clé de base et de la première spécification, chacune des clés étendues comprenant une clé de base modifiée et une indication d'un emplacement d'une agrégation, où, dans la clé de base modifiée, des bits du bit le moins significatif à l'emplacement indiqué dans la clé étendue sont unifiés, l'emplacement de l'agrégation indiqué dans chacune des clés étendues étant différent l'un de l'autre, le troisième nombre $H$ indiquant un nombre de tous les emplacements possibles de l'agrégation selon la première spécification ;
d) mettre à jour (S104), un premier résultat lié à une détermination de heavy hitter pour chacune des clés étendues sur la base d'un algorithme Heavy Hitter.

**2.** Procédé selon la revendication 1, comprenant en outre des étapes consistant à :

e) recevoir une demande d'interrogation concernant le heavy hitter ;
f) déterminer (S105), sur la base de l'algorithme Heavy Hitter, pour chacune des clés étendues, si la clé étendue respective représente le heavy hitter.

**3.** Procédé selon la revendication 1, comprenant en outre des étapes consistant à :

g) recevoir une demande d'interrogation concernant un heavy hitter hiérarchique ;

h) déterminer s'il y a un heavy hitter hiérarchique sur la base des premiers résultats mis à jour à l'étape d).

**4.** Procédé selon la revendication 2, le premier résultat étant une fréquence de la clé étendue respective, l'étape f) comprenant en outre :

f1) la détermination, pendant une période de temps prédéterminée, pour chacune des clés étendues, de si une fréquence de la clé étendue respective est égale ou supérieure à un seuil prédéterminé $\theta \cdot N$, où, $N$ représente un nombre de paquets surveillés durant la période de temps prédéterminée, et $\theta$ représente un paramètre de seuil donné par un utilisateur ou un opérateur ;

f11) si c'est le cas, la détermination de l'emplacement de l'agrégation indiqué dans la clé étendue respective comme le heavy hitter.

**5.** Procédé selon la revendication 1, dans lequel, les paramètres compris dans la clé de base sont sélectionnés dans le groupe constitué de IP source, port source, IP de destination, port de destination, protocole.

**6.** Procédé selon la revendication 1, dans lequel, la première spécification est indiquée par un utilisateur ou un opérateur du réseau.

**7.** Procédé selon la revendication 1, dans lequel, dans la clé de base modifiée comprise dans la clé étendue, des bits du bit le moins significatif à l'emplacement indiqué dans la clé étendue sont mis à zéro.

**8.** Procédé selon la revendication 1, pour une $i_{ème}$ entrée comprise dans la première spécification, $1 \leq i \leq d$, le paramètre comprenant $b_i$ bits, la granularité indiquant que le paramètre peut être modifié sur une résolution de $a_i$ bits, le troisième nombre $H$ est déterminé comme :.

$$H = \left(\left\lceil \frac{b_1}{a_1} + 1 \right\rceil\right) \cdot \left(\left\lceil \frac{b_2}{a_2} + 1 \right\rceil\right) \cdots \cdot \left(\left\lceil \frac{b_d}{a_d} + 1 \right\rceil\right),$$

où la notation $\lceil x \rceil$ signifie que x est arrondi à la valeur entière supérieure la plus proche.

**9.** Nœud de réseau (400), configuré pour :

a) obtenir (S101) une clé de base à partir d'un paquet, la clé de base comprenant un premier nombre a de paramètres caractérisant le paquet, le premier nombre a étant un nombre naturel ;

b) déterminer (S102) une première spécification comprenant un deuxième nombre $d$ d'entrées, chaque entrée indiquant un paramètre compris dans la clé de base, et une granularité correspondant au paramètre, le deuxième nombre $d$ étant un nombre naturel et pas plus grand que le premier nombre $d \leq a$ ;

c) générer (S103) un troisième nombre $H$ de clés étendues pour le paquet sur la base de la clé de base et de la première spécification, chacune des clés étendues comprenant une clé de base modifiée et une indication d'un emplacement d'une agrégation, où, dans la clé de base modifiée, des bits du bit le moins significatif à l'emplacement indiqué dans la clé étendue sont unifiés, l'emplacement de l'agrégation indiqué dans chacune des clés étendues étant différent l'un de l'autre, le troisième nombre $H$ indiquant un nombre de tous les emplacements possibles de l'agrégation selon la première spécification ;

d) mettre à jour (S104), un premier résultat lié à une détermination de heavy hitter pour chacune des clés étendues sur la base d'un algorithme Heavy Hitter.

**10.** Nœud de réseau (400) selon la revendication 9, en outre configuré pour :

e) recevoir une demande d'interrogation concernant le heavy hitter ;

f) déterminer (S105), sur la base de l'algorithme Heavy Hitter, pour chacune des clés étendues, si la clé étendue respective représente le heavy hitter.

**11.** Nœud de réseau (400) selon la revendication 9, en outre configuré pour :

g) recevoir une demande d'interrogation concernant un heavy hitter hiérarchique ;

h) déterminer s'il y a un heavy hitter hiérarchique sur la base des premiers résultats mis à jour à l'étape d).

**12.** Nœud de réseau (400) selon la revendication 9, le premier résultat étant une fréquence de la clé étendue respective, le nœud de réseau (400) étant en outre configuré pour :

f1) déterminer, pendant une période de temps prédéterminée, pour chacune des clés étendues, si une fréquence de la clé étendue respective est égale ou supérieure à un seuil prédéterminé $\theta \cdot N$, où, $N$ représente un nombre de paquets surveillés durant la période de temps prédéterminée, et $\theta$ représente un paramètre de seuil donné par un utilisateur ou un opérateur ;

f11) si c'est le cas, le nœud de réseau étant en outre configuré pour déterminer l'emplacement de l'agrégation indiqué dans la clé étendue respective comme le heavy hitter.

**13.** Nœud de réseau (400) selon la revendication 9, dans lequel, les paramètres compris dans la clé de base sont sélectionnés dans le groupe constitué de IP source, port source, IP de destination, port de destination, protocole.

**14.** Nœud de réseau (400) selon la revendication 9, dans lequel, la première spécification est indiquée par un utilisateur ou un opérateur du réseau.

S101

B=<Source
IP=181.7.20.6>

S103

Generate
Hb

S102

User specification
<SourceIP, 8bits>

E1=<SourceIP = 181.7.20.6, *=-1>

E2=<SourceIP = 181.7.20.0, *=3>

E3=<SourceIP = 181.7.0.0, *=2>

E4=<SourceIP = 181.0.0.0, *=1>

E5=<SourceIP = 0.0.0.0, *=0>

S104

HH_Update(E1)

HH_Update(E2)

HH_Update(E3)

HH_Update(E4)

HH_Update(E5)

S105

HH Instance
(Extended
keys)

Fig .1

| Src/Dest | * | d1.* | d1.d2.* | d1.d2.d3.* | d1.d2.d3.d4 |
|---|---|---|---|---|---|
| * | (*,*) | (*,d1.*) | (*,d1.d2.*) | (*,d1.d2.d3.*) | (*,d1.d2.d3.d4) |
| s1.* | (s1.*,*) | (s1.*,d1.*) | (s1.*,d1.d2.*) | (s1.*,d1.d2.d3.*) | (s1.*,d1.d2.d3.d4) |
| s1.s2.* | (s1.s2.*,*) | (s1.s2.*,d1.*) | (s1.s2.*,d1.d2.*) | (s1.s2.*,d1.d2.d3.*) | (s1.s2.*,d1.d2.d3.d4) |
| s1.s2.s3.* | (s1.s2.s3.*,*) | (s1.s2.s3.*,d1.*) | (s1.s2.s3.*,d1.d2.*) | (s1.s2.s3.*,d1.d2.d3.*) | (s1.s2.s3.*,d1.d2.d3.d4) |
| s1.s2.s3.s4 | (s1.s2.s3.s4.*) | (s1.s2.s3.s4,d1.*) | (s1.s2.s3.s4,d1.d2.*) | (s1.s2.s3.s4,d1.d2.d3.*) | (s1.s2.s3.s4,d1.d2.d3.d4) |

Fig. 2

**Algorithm 1** Our HHH algorithm

```
1: function HHH UPDATE(Basic key b, user specification S_p)
2:     generate H_b according to S_p.
3:     for p ∈ H_b  do
4:         HH.UPDATE(p)
5:     end for
6: end function
7: function OUTPUT(Threshold θ)
8:     P = φ
9:     for Level l = |H| down to 0.  do
10:         for  each p in level l do
11:             Ĉ_{p|P} = f̂_p^+ + calcPred(p, P)
12:
13:             if Ĉ_{p|P} ≥ θN then
14:                 P = P ∪ {p}                    ▷ p is an HHH candidate
15:                 print (p, f̂_p^-, f̂_p^+)
16:             end if
17:         end for
18:     end for
19:     return P
20: end function
21: function CALCPRED(prefix p, set P)
22:     R = 0
23:     for  each h ∈ G(p|P) do
24:         R = R - f̂_h^-
25:     end for
26:     for  each pair h, h' ∈ G(p|P) do
27:         q = glb(h, h')
28:         if ∄h_3 ≠ h, h' ∈ G(p|P), q ≼ h_3 then
29:             R = R + f̂_q^+
30:         end if
31:     end for
32:     return R
33: end function
```

Fig .3

400

401

402

403

404

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Constant Time Updates in Hierarchical Heavy Hitters. **RAN BEN BASAT et al.** ARXIV.ORG. CORNELL UNIVERSITY LIBRARY, 21 July 2017
- **M. ALIZADEH ; S. YANG ; M. SHARIF ; S. KATTI ; N. MCKEOWN ; B. PRABHAKAR ; S. SHENKER.** pFabric: Minimal Near-optimal Datacenter Transport. *ACM SIGCOMM,* 2013, 435-446
- **A. R. CURTIS ; J. C. MOGUL ; J. TOURRILHES ; P. YALAGANDULA ; P. SHARMA ; S. BANERJEE.** DevoFlow: Scaling Flow Management for Highperformance Networks. *ACM SIGCOMM,* 2011, 254-265
- **A. KABBANI ; M. ALIZADEH ; M. YASUDA ; R. PAN ; B. PRABHAKAR.** AFQCN: Approximate Fairness with Quantized Congestion Notification for Multi-tenanted Data Centers. *IEEE HOTI,* 2010, 58-65
- **T. BENSON ; A. ANAND ; A. AKELLA ; M. ZHANG.** MicroTE: Fine Grained Traffic Engineering for Data Centers. *ACM CoNEXT,* 2011, 8
- **P. GARCIA-TEODORO ; J. E. DIAZ-VERDEJO ; G. MACIA-FERNANDEZ ; E. VAZQUEZ.** Anomaly-Based Network Intrusion Detection: Techniques, Systems and Challenges. *Computers and Security,* 2009, 18-28
- **L. YING ; R. SRIKANT ; X. KANG.** The Power of Slightly More than One Sample in Randomized Load Balancing. *IEEE INFOCOM,* April 2015, 1131-1139
- **M. ALIZADEH ; T. EDSALL ; S. DHARMAPURIKAR ; R. VAIDYANATHAN ; K. CHU ; A. FINGERHUT ; V. T. LAM ; F. MATUS ; R. PAN ; N. YADAV.** CONGA: Distributed Congestion-aware Load Balancing for Datacenters. *ACM SIGCOMM,* 2014, 503-514
- **G. EINZIGER ; R. FRIEDMAN.** TinyLFU: A Highly Efficient Cache Admission Policy. *Euromicro PDP,* 2014, 146-153
- **Y. ZHANG ; S. SINGH ; S. SEN ; N. DUFFIELD ; C. LUND.** Online Identification of Hierarchical Heavy Hitters: Algorithms, Evaluation, and Applications. *ACM IMC,* 2004, 101-114
- **V. SEKAR ; N. DUFFIELD ; O. SPATSCHECK ; J. VAN DER MERWE ; H. ZHANG.** LADS: Large-scale Automated DDOS Detection System. *USENIX AT-EC,* 2006, 16-16

- Hierarchical Heavy Hitters with the Space Saving Algorithm. **M. MITZENMACHER ; T. STEINKE ; J. THALER.** Proceedings of the Meeting on Algorithm Engineering & Experimiments. ALENEX, 2012, 160-174
- **G. CORMODE ; F. KORN ; S. MUTHUKRISHNAN ; D. SRIVASTAVA.** Finding Hierarchical Heavy Hitters in Streaming Data. *ACM Trans. Knowl. Discov. Data,* February 2008, vol. 1 (4
- Finding Hierarchical Heavy Hitters in Data Streams. *VLDB,* 2003, 464-475
- **L. JOSE ; M. YU.** Online measurement of large traffic aggregates on commodity switches. *USENIX Hot-ICE,* 2011
- **G. CORMODE ; F. KORN ; S. MUTHUKRISHNAN ; D. SRIVASTAVA.** Diamond in the Rough: Finding Hierarchical Heavy Hitters in Multi-dimensional Data. *SIGMOD,* 2004, 155-166
- **J. HERSHBERGER ; N. SHRIVASTAVA ; S. SURI ; C. D. T'OTH.** Space Complexity of Hierarchical Heavy Hitters in Multi-dimensional Data Streams. *ACM PODS,* 2005, 338-347
- Separator: Sifting Hierarchical Heavy Hitters Accurately from Data Streams. **Y. LIN ; H. LIU.** ADMA. ADMA, 2007, 170-182
- **P. TRUONG ; F. GUILLEMIN.** Identification of heavyweight address prefix pairs in IP traffic. *ITC,* September 2009, 1-8
- **A. METWALLY ; D. AGRAWAL ; A. E. ABBADI.** Efficient Computation of Frequent and Top-k Elements in Data Streams. *ICDT,* 2005
- **S. MUTHUKRISHNAN.** Data Streams: Algorithms and Applications. *Foundations and Trends in Theoretical Computer Science,* 2005, vol. 1 (2), 117-236
- Fast data stream algorithms using associative memories. **N. BANDI ; A. METWALLY ; D. AGRAWAL ; A. EL ABBADI.** SIGMOD. ACM, 2007, 247-256
- **E. D. DEMAINE ; A. L'OPEZ-ORTIZ ; J. I. MUNRO.** Frequency estimation of internet packet streams with limited space. *EATCS ESA,* 2002, 348-360
- **R. M. KARP ; S. SHENKER ; C. H. PAPADIMITRIOU.** A simple algorithm for finding frequent elements in streams and bags. *ACM Transactions Database Systems,* March 2003, vol. 28 (1
- **G. S. MANKU ; R. MOTWANI.** Approximate frequency counts over data streams. *VLDB,* 2002

- **V. SIVARAMAN ; S. NARAYANA ; O. ROTTENSTREICH ; S. MUTHUKRISHNAN ; J. REXFORD.** Smoking out the heavy-hitter flows with hashpipe. *CoRR,* 2016, http://arxiv.org/abs/1611.04825
- **P. BOSSHART ; D. DALY ; G. GIBB ; M. IZZARD ; N. MCKEOWN ; J. REXFORD ; C. SCHLESINGER ; D. TALAYCO ; A. VAHDAT ; G. VARGHESE.** P4: Programming protocol-independent packet processors. *SIGCOMM Comput. Commun. Rev.,* July 2014, vol. 44 (3), 87-95, http://doi.acm.org/10.1145/2656877.2656890
- **R. BEN-BASAT ; G. EINZIGER ; R. FRIEDMAN ; Y. KASSNER.** Optimal elephant flow detection. *IEEE INFOCOM,* 2017
- Randomized admission policy for efficient top-k and frequency estimation. *IEEE INFOCOM,* 2017